# EUROPÄISCHE PATENTSCHRIFT

(11) **EP 2 456 315 B1**
(45) Veröffentlichungstag und Bekanntmachung des Hinweises auf die Patenterteilung: **10.07.2013**
(21) Anmeldenummer: 11720805.8
(22) Anmeldetag: 24.05.2011
(51) Int. Cl.: A22C 25/16

(54) **VORRICHTUNG UND VERFAHREN ZUM FILETIEREN VON GEKÖPFTEN UND ENTWEIDETEN FISCHEN**
APPARATUS AND METHOD FOR FILLETING BEHEADED AND EVISCERATED FISH
DISPOSITIF ET PROCÉDÉ DE RÉALISATION DE FILETS DE POISSONS ÉTÊTÉS ET ÉVISCÉRÉS

(30) Priorität: 31.05.2010 DE 102010022055
(43) Veröffentlichungstag der Anmeldung: 30.05.2012
(73) Patentinhaber: Nordischer Maschinenbau Rud. Baader GmbH + Co. KG, 23560 Lübeck (DE)
(72) Erfinder: JÜRS, Michael, 23683 Haffkrug (DE); SCHROEDER, Matthias, 23619 Badendorf (DE)
(74) Vertreter: Stork Bamberger
(86) Internationale Anmeldenummer: PCT/EP2011/058430
(87) Internationale Veröffentlichungsnummer: WO 2011/151220

(56) Entgegenhaltungen:
- GB-A- 1 046 960
- US-B1- 6 200 211

## Beschreibung

Die Erfindung betrifft eine Vorrichtung zum Filetieren von geköpften und entweideten Fischen, umfassend ein Schneidaggregat zum Filetieren der Fische, wobei das Schneidaggregat mindestens ein Kreismesserpaar aufweist, sowie einen endlos umlaufenden Transportförderer mit mindestens einem sattelförmigen Stützkörper zum Aufnehmen der Fische und Fördern derselben in Transportrichtung T durch das Schneidaggregat mit dem Schwanz voraus.

Des Weiteren betrifft die Erfindung ein Verfahren zum Filetieren von geköpften und entweideten Fischen, mit den Schritten: Transportieren eines mit seiner Mittelgräte auf einem Stützkörper mit dem Rücken nach oben aufliegenden Fisches Schwanz voraus durch eine Vorrichtung zum Filetieren von Fischen, wobei während des Transports die ventralen Bauchgräten und/oder die dorsalen Rückengräten mittels eines Kreismesserpaares freigeschnitten werden.

Solche Vorrichtungen und Verfahren werden in der Fisch verarbeitenden Industrie eingesetzt, um die Filets vom Grätenskelett des Fisches zu trennen. Genauer werden die ventralren Bauchspeichen und die dorsalen Rückenspeichen freigeschnitten. Dabei greifen jeweils zwei ein Kreismesserpaar bildende Kreismesser für die Rückenschnitte von oben und für die Bauchschnitte von unten am Fisch an. Die Kreismesser sind um eine Achse rotierend angetrieben, wobei die Achsen quer zur Transportrichtung T verlaufen. Zum Freischneiden wird der Fisch in Transportrichtung T durch die Kreismesserpaare hindurch transportiert, wobei der Fisch bzw. die Mittelgräte (Wirbelsäule) des Fisches, die üblicherweise auf einer Stützkante des Stützkörpers aufliegt, die Transportebene E definiert. Die beiden Kreismesser für die Rückenschnitte liegen oberhalb der Transportebene und die beiden Kreismesser für die Bauchschnitte liegen unterhalb der Transportebene. Die beiden Kreismesser eines Kreismesserpaares weisen einen Abstand zueinander auf, um den Transport der Fische durch die bzw. zwischen den Kreismessern hindurch zu ermöglichen. Anders ausgedrückt verlaufen die beiden Kreismesser eines Kreismesserpaares jeweils links und rechts neben der Mittelgräte bzw. neben den aus der Mittelgräte hervorstehenden Speichen.

Das Dokument US6200211 beschreibt eine Vorrichtung nach dem Oberbegriff das Anspruchs 1.

Es ist in der Praxis üblich, dass sich die Kreismesser eines Kreismesserpaares in ihrem Richtungssinn mit der Transportrichtung T drehen. Das bedeutet, dass die Kreismesser im Kontakt mit dem Fisch diesen in Transportrichtung T ziehen. Der Richtungssinn der Kreismesser ist daher stets bezogen auf die Position bzw. den Moment, in der bzw. in dem die Kreismesser zum Schneiden auf den Fisch treffen. Drehrichtung und Richtungssinn sind daher nicht zwangläufig gleich. Die Drehrichtung ist bezogen auf die Antriebsachse. Der Richtungssinn ist - wie erwähnt - bezogen auf das Auftreffen der Kreismesser auf den Fisch. Die beiden Kreismesser eines Kreismesserpaares sind in der bisherigen Praxis dabei gleichgesinnt angetrieben. Dieses Prinzip der gleichlaufenden und mitlaufenden Kreismesser hat zur Folge, dass die Schnittkräfte parallel gerichtet den Fischrumpf und damit das Fleisch aufschneiden. Dabei wirken Kraftvektoren von der Messerschneide aus gesehen abweisend. Um diese nach außen wirkenden Kräfte zu kompensieren, müssen äußere Kräfte aufgebracht werden, um das zu trennende Fleisch zurück in den Bereich der Kreismesser zu drängen. Diese äußeren Kräfte bewirken jedoch, dass der auf dem Stützkörper liegende Fischrumpf, von dem die Filets getrennt werden sollen, in Transportrichtung T beschleunigt wird. Um zu verhindern, dass der Fischrumpf vom Stützkörper gezogen wird, sind zusätzliche Halteelemente notwendig. Um die Position des Fischrumpfes auf dem Stützkörper zu halten, sind daher z.B. so genannte Fangzähne auf der Stützkante des Stützkörpers vorgesehen. Allerdings können die erwähnten Kräfte trotz der genannten Maßnahmen zu einer Fehlpositionierung der Fischrümpfe auf dem Stützkörper führen, so dass die Folgeschnitte nicht optimal ausgeführt werden können.

Der Erfindung liegt daher die Aufgabe zugrunde, eine konstruktiv einfache Vorrichtung zu schaffen, die ein verbessertes Schnittergebnis gewährleistet. Es ist weiterhin Aufgabe der Erfindung, ein entsprechendes Verfahren vorzuschlagen.

Diese Aufgabe wird zum einen durch eine Vorrichtung mit den eingangs genannten Merkmalen dadurch gelöst, dass die beiden Kreismesser eines Kreismesserpaares in entgegen gesetzter Richtung angetrieben sind. Dadurch wird erreicht, dass sich die Schnittkräfte aufheben. Genauer bewirkt das Kreismesser, das in Transportrichtung T angetrieben ist, also in Transportrichtung T mitläuft, dass die Schnittkraft bzw. eine Komponente derselben von der Messerschneide abweisend nach außen wirkt. Dadurch wird verhindert, dass die Mittelgräte oder das Grätengerüst bzw. die Schwanzflosse von dem Kreismesser eingezogen wird. Das Kreismesser, das gegenläufig angetrieben ist, bewirkt, dass die Schnittkraft bzw. eine Komponente derselben in Richtung der Messerschneide, also Fleisch einziehend wirkt. Dadurch wird ein Kräftegleichgewicht erzielt, das ohne zusätzliche Halteelemente oder dergleichen zu einer stabilen Position des Fischrumpfes auf dem Stützkörper führt.

Eine zweckmäßige Weiterbildung der Erfindung zeichnet sich dadurch aus, dass das Schneidaggregat ein erstes, unteres Kreismesserpaar zum Freischneiden der ventralen Bauchgräten und ein zweites, oberes Kreismesserpaar zum Freischneiden der dorsalen Rückengräten umfasst, wobei die beiden Kreismesser jedes Kreismesserpaares jeweils in entgegen gesetzter Richtung angetrieben sind. Dadurch, dass sowohl oberhalb als auch unterhalb der Transportebene ein Kräftegleichgewicht hergestellt ist, wird die Position des Fischrumpfes auf dem Stützkörper stabilisiert.

Vorteilhafterweise weist das in Transportrichtung T linke Kreismesser des unteren Kreismesserpaares die gleiche Drehrichtung auf wie das in Transportrichtung T rechte Kreismesser des oberen Kreismesserpaares. Durch diese Überkreuzanordnung richtungsgleich angetriebener Kreismesser wird eine weiter verbesserte Positionierung des Fischrumpfes erreicht. Anders ausgedrückt weisen diagonal gegenüber liegenden Kreismesser unterschiedlicher Kreismesserpaare die gleiche Drehrichtung auf, so dass der Fischrumpf durch die Schnittkräfte bzw. Komponenten derselben quasi auf dem Stützkörper in der optimalen Position fixiert wird. Durch die gleiche Drehrichtung der diagonal gegenüber liegenden Kreismesser einerseits und die Anordnung des einen Kreismessers oberhalb der Transportebene E und des anderen Kreismessers unterhalb der Transportebene E andererseits haben die beiden diagonal gegenüber liegenden Kreismesser einen unterschiedlichen Richtungssinn bezogen auf den Fisch.

Zum anderen wird die Aufgabe durch ein Verfahren mit den eingangs genannten Schritten dadurch gelöst, dass die Kreismesser eines Kreismesserpaares beim Schneiden in unterschiedlicher Richtung drehen. Die sich daraus ergebenden Vorteile wurden bereits im Zusammenhang mit der Vorrichtung beschrieben, weshalb zur Vermeidung von Wiederholungen auf die entsprechenden Passagen verwiesen wird.

Weitere zweckmäßige und/oder vorteilhafte Merkmale und Weiterbildungen der Erfindung ergeben sich aus den Unteransprüchen und der Beschreibung. Eine besonders bevorzugte Ausführungsform der Erfindung sowie das erfindungsgemäße Verfahrensprinzip werden anhand der beigefügten Zeichnung näher erläutert. In der Zeichnung zeigt:

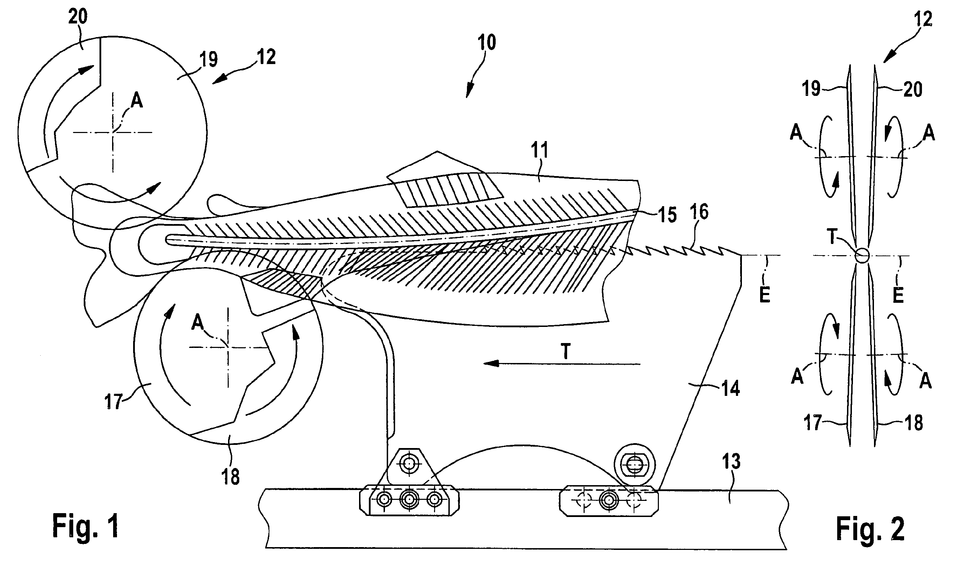

- Fig. 1: eine schematische Darstellung wesentlicher Komponenten, nämlich insbesondere das Schneidaggregat sowie einen auf dem Stützkörper angeordneten Fischrumpf, der Filetiervorrichtung in Seitenansicht, und
- Fig. 2: die Kreismesseranordnung in Vorderansicht.

Die in der Zeichnung dargestellte Vorrichtung dient zum Filetieren von geköpften und entweideten Fischen.

Die Vorrichtung 10 zum Filetieren geköpfter und entweideter Fische 11 umfasst in üblicher Weise ein Schneidaggregat 12 sowie einen endlos umlaufenden Transportförderer 13 mit mindestens einem Stützkörper 14. Der Fisch 11 bzw. der Fischrumpf liegt mit seiner Mittelgräte 15 auf einer Stützkante 16 des Stützkörpers 14. Der Fisch 11 wird Schwanz voraus mit dem Rücken nach oben in Transportrichtung T durch die Vorrichtung 10 gefördert. Dabei definiert der Fisch 11 bzw. dessen Mittelgräte 15 bzw. genauer die Stützkante 16 des Stützkörpers 14 die Transportebene E.

Das Schneidaggregat 12 zum Filetieren der Fische 11 weist mindestens ein Kreismesserpaar 17, 18 auf. Das rotierend antreibbare Kreismesserpaar 17, 18 ist in bekannter Weise je nach Anordnung zum Transportförderer 13 zum Freischneiden der dorsalen Rückenspeichen bzw. Rückengräten oder der ventralen Bauchspeichen bzw. Bauchgräten ausgebildet und eingerichtet. Vorzugsweise umfasst das Schneidaggregat 12 ein zweites Kreismesserpaar 19, 20, das entsprechend dem ersten Kreismesserpaar 17, 18 ausgebildet und eingerichtet ist. Ein Kreismesserpaar 17, 18 ist dann zum Freischneiden der Bauchgräten unterhalb der Transportebene E angeordnet. Das andere Kreismesserpaar 19, 20 ist zum Freischneiden der Rückengräten oberhalb der Transportebene E angeordnet. Die beiden Kreismesserpaare 17, 18; 19, 20 können in Transportrichtung T versetzt zueinander oder direkt übereinander angeordnet sein.

Der endlos umlaufende Transportförderer 13 umfasst vorzugsweise mehrere Stützkörper 14. Diese sattelförmigen Stützkörper 14, die auch als Transportsattel bezeichnet werden, sind fest aber lösbar am Transportförderer 13 angeordnet und laufen mit diesem um. Die Stützkörper 14 sind zum Aufnehmen der Fische 11 ausgebildet und eingerichtet. Mittels des Stützkörpers 14 sind die auf ihm liegenden Fische 11 mit dem Schwanz voraus in Transportrichtung T durch das Schneidaggregat 12 förderbar.

Die beiden Kreismesser 17, 18 bzw. 19, 20 jedes Kreismesserpaares sind in entgegen gesetzter Richtung angetrieben. Mit anderen Worten weisen die beiden Kreismesser 17, 18; 19, 20 jedes Kreismesserpaares eine unterschiedliche Drehrichtung auf. Das in Transportrichtung T linke Kreismesser 17 des unteren Kreismesserpaares 17, 18 ist z.B. gegenläufig zur Transportrichtung T angetrieben, während das rechte Kreismesser 18 des unteren Kreismesserpaares 17, 18 in Transportrichtung T angetrieben ist. Somit übt das Kreismesser 17 eine verzögernde/bremsende Wirkung auf den Fisch 11 aus, während das Kreismesser 18 eine beschleunigende Wirkung auf den Fisch 11 ausübt. Im Ergebnis heben sich diese Kräfte auf. Selbstverständlich können die Drehrichtungen der Kreismesser 17, 18 und damit der Richtungssinn bezogen auf den Fisch 11 auch vertauscht werden.

Entsprechend dem ersten, unteren Kreismesserpaar 17, 18 ist auch das zweite, obere Kreismesserpaar 19, 20 angetrieben, nämlich ebenfalls in entgegen gesetzter Richtung zueinander. Die Drehrichtung der Kreismesser 17, 18 einerseits und der Kreismesser 19, 20 andererseits kann variieren. Bevorzugt ist eine Variante, bei der das in Transportrichtung T linke Kreismesser 17 des unteren Kreismesserpaares 17, 18 die gleiche Drehrichtung aufweist wie das in Transportrichtung T rechte Kreismesser 20 des oberen Kreismesserpaares 19, 20. Dadurch, dass das Kreismesser 17 von unten am Fisch 11 angreift, wirkt die Schnittkraft bzw. eine Komponente derselben entgegen der Transportrichtung T. Das Kreismesser 20 greift von oben am Fisch 11 an, so dass die Schnittkraft bzw. eine Komponente derselben in Transportrichtung T wirkt. Bei dieser Ausführungsform sind die beiden Kreismesser 18, 19 entsprechend angetrieben, also mit gleicher Drehrichtung aber unterschiedlichem Richtungssinn. Dadurch sind die beiden in Transportrichtung T links liegenden Kreismesser 17, 19 bezüglich des Richtungssinns entgegen der Transportrichtung T angetrieben, während die beiden rechts liegenden Kreismesser 18, 20 bezüglich des Richtungssinns in Transportrichtung T angetrieben sind. Die Antriebsrichtungen der Kreismesser 17 bis 20 können jedoch auch exakt umgekehrt gewählt werden.

Die Antriebsgeschwindigkeiten der Kreismesser 17 bis 20 sind vorzugsweise gleich gewählt. Es besteht jedoch die Möglichkeit, die Antriebsgeschwindigkeit der unteren Kreismesser 17, 18 gegenüber der Antriebsgeschwindigkeit der oberen Kreismesser 19, 20 unterschiedlich zu wählen. Es besteht weiterhin die Möglichkeit, auch die Antriebsgeschwindigkeiten der Kreismesserpaare 17, 18; 19, 20 untereinander zu variieren, so dass alle Kreismesser 17 bis 20 mit einer unterschiedlichen Geschwindigkeit angetrieben sind.

Wie weiter oben erwähnt, verlaufen die Achsen A der Kreismesser 17 bis 20 quer zur Transportrichtung T. In einer ersten Ausführung können die Achsen A in einem rechten Winkel zur Transportrichtung T stehen, so dass die beabstandeten Kreismesser 17, 18; 19, 20 eines Paares parallel zueinander verlaufen. Bevorzugt ist jedoch eine Anordnung der Kreismesser 17, 18; 19, 20 eines Paares derart, dass die Kreismesser 17, 18 des unteren Paares in einem Winkel zueinander angeordnet sind. Der Winkel zwischen den beiden Kreismesser 17, 18 ist derart gewählt, dass der Abstand der Kreismesser 17, 18 auf der dem Fisch 11 zugewandten Seite kleiner ist als auf der dem Fisch 11 abgewandten Seite. Dadurch ist der geringste Abstand zwischen den Kreismessern 17, 18 in dem Bereich gewählt, der in den Fisch 11 - möglichst nahe an der Mittelgräte 15 - zum Filetieren eintaucht. Entsprechend sind die Kreismesser 19, 20 des oberen Paares angeordnet, nämlich derart, dass der Abstand auf der dem Fisch 11 zugewandten Seite kleiner ist als auf der dem Fisch 11 abgewandten Seite.

Weitere mögliche Komponenten der Vorrichtung 10, beispielsweise eine Einrichtung zum Zentrieren der Fische 11 oder dergleichen, sowie übliche Ausgestaltungen, wie z.B. das Schwenken der einzelnen Kreismesser etc., sind nicht explizit dargestellt.

Im Folgenden wird das Verfahrensprinzip anhand der Zeichnung näher erläutert: Eine Bedienperson legt den geköpften und entweideten Fisch 11 mit der offenen Bauchhöhle nach unten auf den Stützkörper 14, so dass der Fisch 11 dann Schwanz voraus in Transportrichtung T weist. Der Fisch 11 liegt mit seiner Mittelgräte 15 bzw. Wirbelsäule auf der Stützkante 16 des Stützkörpers 14. Der Fisch 11 bzw. Fischrumpf wird dann mittels des Stützkörpers 14 durch den Schneidapparat 12 transportiert. Zunächst trennen die Kreismesser 17, 18 die Bauchfilets vom Grätenskelett (Freischneiden der ventralen Bauchgräten), indem der Stützkörper 14 zwischen den Kreismessern 17, 18 hindurch transportiert wird. Beim Schneiden der Bauchfilets drehen die Kreismesser 17, 18 mit unterschiedlicher Drehrichtung, so dass ein Kreismesser 17 den Fisch 11 entgegen der Transportrichtung T mit einer Kraftkomponente beaufschlagt, während das andere Kreismesser 18 den Fisch 11 in Transportrichtung T mit einer Kraftkomponente beaufschlagt. Anders ausgedrückt bewirkt das mitlaufende Kreismesser 18, dass die Mittelgräte 15 des Fisches 11 nicht vom Kreismesserpaar 17, 18 eingezogen wird. Das gegenläufige Kreismesser 17 bewirkt, dass die Mittelgräte 15 bzw. die Schwanzflosse bis unterhalb der Mittelgräte 15 eingeschnitten wird. Dadurch wird die Mittelgräte 15 in der mittleren Position auf dem Stützkörper 14 gehalten, was die Schnittführung der Bauchschnitte, aber auch der nachfolgenden Schnitte verbessert. Nach dem Freischneiden der ventralen Bauchgräten wird der Fisch 11 auf dem Stützkörper 14 zwischen den Kreismesser 19, 20 hindurch transportiert. Beim Schneiden der Rückenfilets drehen die Kreismesser 19, 20 ebenfalls mit unterschiedlicher Drehrichtung, so dass ein Kreismesser 19 den Fisch 11 entgegen der Transportrichtung T mit einer Kraftkomponente beaufschlagt, während das andere Kreismesser 20 den Fisch 11 in Transportrichtung T mit einer Kraftkomponente beaufschlagt.

Die Kreismesser 17 bis 20 können alle mit derselben Antriebsgeschwindigkeit angetrieben werden. Optional kann die Antriebsgeschwindigkeit auch von Kreismesser zu Kreismesser unterschiedlich sein. Eine andere Variante sieht vor, dass die Kreismesser 17, 18 bzw. 19, 20 eines Paares dieselbe Geschwindigkeit aufweisen, die Geschwindigkeit der Paare jedoch voneinander abweicht.

Die Kreismesser 17 bis 20 können senkrecht, also in einem rechten Winkel zur Transportrichtung T bzw. zur Transportebene E in den Fisch 11 eintauchen. Alternativ können die Kreismesser 17 bis 20 auch in einem Winkel kleiner oder größer 90° bezogen auf die Transportebene E in den Fisch 11 eintauchen. Das Freischneiden der Bauchgräten und der Rückengräten kann auch parallel, also zeitgleich erfolgen.

## Patentansprüche

1. Vorrichtung (10) zum Filetieren von geköpften und entweideten Fischen (11), umfassend ein Schneidaggregat (12) zum Filetieren der Fische (11), wobei das Schneidaggregat (12) mindestens ein Kreismesserpaar (17, 18 oder 19, 20) aufweist, sowie einen endlos umlaufenden Transportförderer (13) mit mindestens einem sattelförmigen Stützkörper (14) zum Aufnehmen der Fische (11) und Fördern derselben in Transportrichtung T durch das Schneidaggregat (12) mit dem Schwanz voraus, **dadurch gekennzeichnet, dass** die beiden Kreismesser (17, 18 oder 19, 20) eines Kreismesserpaares in entgegen gesetzter Richtung angetrieben sind.

2. Vorrichtung nach Anspruch 1, **dadurch gekennzeichnet, dass** das Schneidaggregat (12) ein erstes, unteres Kreismesserpaar (17, 18) zum Freischneiden der ventralen Bauchgräten und ein zweites, oberes Kreismesserpaar (19, 20) zum Freischneiden der dorsalen Rückengräten umfasst, wobei die beiden Kreismesser (17, 18; 19, 20) jedes Kreismesserpaares jeweils in entgegen gesetzter Richtung angetrieben sind.

3. Vorrichtung nach Anspruch 2, **dadurch gekennzeichnet, dass** das in Transportrichtung T linke Kreismesser (17) des unteren Kreismesserpaares (17, 18) die gleiche Drehrichtung aufweist wie das in Transportrichtung T rechte Kreismesser (20) des oberen Kreismesserpaares (19, 20).

4. Vorrichtung nach Anspruch 2 oder 3, **dadurch gekennzeichnet, dass** die in Transportrichtung T linken Kreismesser (17, 19) beider Kreismesserpaare (17, 18; 19, 20) entgegen der Transportrichtung T angetrieben sind und die in Transportrichtung T rechten Kreismesser (18, 20) beider Kreismesserpaare (17, 18; 19, 20) in Transportrichtung T angetrieben sind oder umgekehrt.

5. Vorrichtung nach einem der Ansprüche 1 bis 4, **dadurch gekennzeichnet, dass** die Kreismesser (17, 18; 19, 20) eines Kreismesserpaares wahlweise mit gleicher oder unterschiedlicher Geschwindigkeit angetrieben sind.

6. Vorrichtung nach einem der Ansprüche 1 bis 5, **dadurch gekennzeichnet, dass** das das untere Kreismesserpaar (17, 18) wahlweise mit der gleichen oder einer unterschiedlichen Geschwindigkeit angetrieben ist wie das obere Kreismesserpaar (19, 20).

7. Vorrichtung nach einem der Ansprüche 2 bis 6, **dadurch gekennzeichnet, dass** die Kreismesser (17, 18) des unteren Kreismesserpaares in einem Winkel zueinander angeordnet sind, derart, dass der Abstand der Kreismesser (17, 18) auf der dem Fisch (11) zugewandten Seite kleiner ist als auf der dem Fisch (11) abgewandten Seite.

8. Vorrichtung nach einem der Ansprüche 2 bis 7, **dadurch gekennzeichnet, dass** die Kreismesser (19, 20) des oberen Kreismesserpaares in einem Winkel zueinander angeordnet sind, derart, dass der Abstand der Kreismesser (19, 20) auf der dem Fisch (11) zugewandten Seite kleiner ist als auf der dem Fisch (11) abgewandten Seite.

9. Verfahren zum Filetieren von geköpften und entweideten Fischen (11), mit den Schritten:
- Transportieren eines mit seiner Mittelgräte (15) auf einem Stützkörper (14) mit dem Rücken nach oben aufliegenden Fisches (11) Schwanz voraus durch eine Vorrichtung (10) zum Filetieren von Fischen, wobei während des Transports
- die ventralen Bauchgräten und/oder die dorsalen Rückengräten mittels eines Kreismesserpaares (17, 18; 19, 20) freigeschnitten werden,
**dadurch gekennzeichnet, dass** die Kreismesser (17, 18; 19, 20) eines Kreismesserpaares beim Schneiden in unterschiedlicher Richtung drehen.

10. Verfahren nach Anspruch 9, **dadurch gekennzeichnet, dass** jeweils ein Kreismesser (17, 19) eines Kreismesserpaares (17, 18; 19, 20) entgegen der Transportrichtung T und das andere Kreismesser (18, 20) in Transportrichtung T angetrieben wird.

## Claims

1. Apparatus (10) for filleting decapitated and gutted fish (11), comprising a cutting unit (12) for filleting the fish (11), wherein the cutting unit (12) has at least one pair of circular blades (17, 18 or 19, 20), and an endlessly rotating transport conveyor (13) with at least one saddle-shaped supporting body (14) for receiving the fish (11) and conveying them in the direction of transport T through the cutting unit (12) tail first, **characterised in that** the two circular blades (17, 18 or 19, 20) of a pair of circular blades are driven in opposite directions.

2. Apparatus according to claim 1, **characterised in that** the cutting unit (12) comprises a first, lower pair of circular blades (17, 18) for cutting free the ventral belly bones, and a second, upper pair of circular blades (19, 20) for cutting free the dorsal back bones, wherein the two circular blades (17, 18; 19, 20) of each pair of circular blades are driven in opposite directions.

3. Apparatus according to claim 2, **characterised in that** the left circular blade (17) of the lower pair of circular blades (17, 18) in the direction of transport T has the same direction of rotation as the right circular blade (20) of the upper pair of circular blades (19, 20) in the direction of transport T.

4. Apparatus according to claim 2 or 3, **characterised in that** the left circular blades (17, 19) of the two pairs of circular blades (17, 18; 19, 20) in the direction of transport T are driven in the direction opposite the direction of transport T, and the right circular blades (18, 20) of the two pairs of circular blades (17, 18; 19, 20) in the direction of transport T are driven in the direction of transport T, or vice versa.

5. Apparatus according to any one of claims 1 to 4, **characterised in that** the circular blades (17, 18; 19, 20) of a pair of circular blades are driven optionally at the same or different speeds.

6. Apparatus according to any one of claims 1 to 5, **characterised in that** the lower pair of circular blades (17, 18) is optionally driven at the same or a different speed to the upper pair of circular blades (19, 20).

7. Apparatus according to any one of claims 2 to 6, **characterised in that** the circular blades (17, 18) of the lower pair of circular blades are arranged at an angle to each other, such that the distance between the circular blades (17, 18) is shorter on the side facing towards the fish (11) than on the side facing away from the fish (11).

8. Apparatus according to any one of claims 2 to 7, **characterised in that** the circular blades (19, 20) of the upper pair of circular blades are arranged at an angle to each other, such that the distance between the circular blades (19, 20) is shorter on the side facing towards the fish (11) than on the side facing away from the fish (11).

9. Method for filleting decapitated and gutted fish (11), with the steps of:
- transporting a fish (11) resting with its backbone (15) on a supporting body (14) with its back at the top, tail first through an apparatus (10) for filleting fish, wherein during transport
- the ventral belly bones and/or the dorsal back bones are cut free by means of a pair of circular blades (17, 18; 19, 20),
**characterised in that** the circular blades (17, 18; 19, 20) of a pair of circular blades rotate in different directions during cutting.

10. Method according to claim 9, **characterised in that** one circular blade (17, 19) of a pair of circular blades (17, 18; 19, 20) is driven in the direction opposite the direction of transport T, and the other circular blade (18, 20) is driven in the direction of transport T.

## Revendications

1. Dispositif (10) de réalisation de filets de poissons (11) étêtés et éviscérés, comprenant un ensemble (12) de coupe servant à lever des filets de poissons (11), ledit ensemble (12) de coupe présentant au moins une paire de lames circulaires (17, 18 ou 19, 20), et un convoyeur (13) qui tourne en continu et est doté d'au moins un corps (14) d'appui en forme de selle pour recevoir les poissons (11) et les transporter dans le sens de transport T à travers l'ensemble (12) de coupe, la queue en avant, caractérisé ce que les deux lames circulaires (17, 18 ou 19, 20) d'une paire de lames circulaires sont entraînées en sens inverse.

2. Dispositif selon la revendication 1, **caractérisé en ce que** l'ensemble (12) de coupe comprend une première paire (17, 18) de lames circulaires inférieure pour enlever par découpage les arêtes ventrales et une deuxième paire (19, 20) de lames circulaires supérieure pour enlever par découpage les arêtes dorsales, les deux lames circulaires (17, 18 ; 19, 20) de chaque paire de lames circulaires étant respectivement entraînées en sens inverse.

3. Dispositif selon la revendication 2, **caractérisé en ce que** la lame circulaire (17) à gauche dans le sens de transport T de la paire (17, 18) de lames circulaires inférieure présente le même sens de rotation que la lame circulaire (20) à droite dans le sens de transport T de la paire (19, 20) de lames circulaires supérieure.

4. Dispositif selon la revendication 2 ou 3, **caractérisé en ce que** les lames circulaires (17, 19) à gauche dans le sens de transport T des deux paires (17, 18; 19, 20) de lames circulaires sont entraînées dans le sens contraire du sens de transport T et les lames circulaires (18, 20) à droite dans le sens de transport T des deux paires (17, 18 ; 19, 20) de lames circulaires sont entraînées dans le sens de transport T ou vice-versa.

5. Dispositif selon l'une des revendications 1 à 4, caractérisé en en ce que les lames circulaires (17, 18 ; 19, 20) d'une paire de lames circulaires sont entraînées au choix à vitesse équivalente ou différente.

6. Dispositif selon l'une des revendications 1 à 5, **caractérisé en ce que** la paire (17, 18) de lames circulaires inférieure est entraînée au choix à vitesse équivalente à la paire (19, 20) de lames circulaires supérieure ou à vitesse différente de celle-ci,

7. Dispositif selon l'une des revendications 2 à 6, **caractérisé en ce que** les lames circulaires (17, 18) de la paire de lames circulaires inférieure forment un angle tel que la distance entre les lames circulaires (17, 18) du côté tourné vers le poisson (11) est inférieure à celle du côté opposé au poisson (11).

8. Dispositif selon l'une des revendications 2 à 7, **caractérisé en ce que** les lames circulaires (19, 20) de la paire de lames circulaires supérieure forment un angle tel que la distance entre les lames circulaires (19, 20) du côté tourné vers le poisson (11) est inférieure à celle du côté opposé au poisson (11).

9. Procédé de réalisation de filets de poissons (11) étêtés et éviscérés, comprenant les étapes :
- transporter un poisson (11), son arête centrale (15) reposant sur un corps (14) d'appui, le dos vers le haut, la queue en avant, à travers un dispositif (10) de réalisation de filets de poissons,
- les arêtes ventrales et/ou les arêtes dorsales étant enlevées par découpage au moyen d'une paire (17, 18 ; 19, 20) de lames circulaires pendant le transport,
**caractérisé en ce que** les lames circulaires (17, 18 ; 19, 20) d'une paire de lames circulaires tournent en sens inverse lors de la coupe.

10. Procédé selon la revendication 9, **caractérisé en ce qu'**une lame circulaire (17, 19) de chaque paire (17, 18 ; 19, 20) de lames circulaires est entraînée en sens contraire du sens de transport T et l'autre lame circulaire (18, 20) est entraînée dans le sens de transport T.
